Europäisches Patentamt

European Patent Office

Office européen des brevets

(11) Publication number: **0 325 680 B1**

## EUROPEAN PATENT SPECIFICATION

(45) Date of publication of patent specification: **22.07.92**　(51) Int. Cl.⁵: **F16C 23/10**

(21) Application number: **88103362.5**

(22) Date of filing: **04.03.88**

(54) **Adjustable combined bearing.**

(30) Priority: **31.12.87 IT 3353787 U**

(43) Date of publication of application:
**02.08.89 Bulletin 89/31**

(45) Publication of the grant of the patent:
**22.07.92 Bulletin 92/30**

(84) Designated Contracting States:
**AT BE CH DE FR GB GR LI LU NL SE**

(56) References cited:
**DE-B- 1 287 381　　GB-A- 2 117 088**
**US-A- 2 059 150　　US-A- 2 881 031**
**US-A- 3 270 582　　US-A- 4 687 349**

**PATENT ABSTRACTS OF JAPAN, vol. 7, no.
20 (M-188)[1165], 26th January 1983; & JP-
A-57 173 655 (NISSAN JIDOSHA K.K.)
26-10-1982**

**G.Niemann "Maschinenelemente" Band 1,2.
Auflage 1975, page 316 (Bild 15/17), page 342
(Tafel 16/8), page 372 (Bild 18/9 fig.2).**

**"Wälzlagertechnik", FAG Kugelfischer,1981-2
page 14.**

(73) Proprietor: **FARO INDUSTRIALE S.P.A.
Via Torino (Zona Ind.)
I-29010 Calendasco PC(IT)**

(72) Inventor: **Viganotti, Giorgio
Via Di Vittorio 4
I-20019 Settimo Milanese MI(IT)**

(74) Representative: **La Ciura, Salvatore
c/o STUDIO D'ORIO Via F. Sforza, 3
I-20122 Milan(IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The invention relates to an adjustable combined bearing. This is a type of bearing particularly suitable for use inside channel iron, such as that used to form the uprights of fork-lift trucks, where it has a double function - guiding the upright during the stroke and absorbing the lateral thrusts which may occur, for example following load imbalance, oscillations, etc.

As a result the bearing works against the flanges of the channel iron to perform the said guide function, and at the same time works against the web of the same channel, in this case acting as a thrust bearing.

One pair of bearings is generally used on each side of fork-lift truck uprights; one of these acts as longitudinal guide, while the other, fitted on an auxiliary support, acts as lateral thrust support roller, working against the channel web.

This system has a number of drawbacks, the main one being that it restricts the slide or stroke of the channel iron making up the upright due to the amount of space taken up by the two bearings.

To eliminate this difficulty and increase the stroke of the mobile part of the upright, combined bearings have been designed to perform both the above-mentioned functions of guide and lateral thrust absorption.

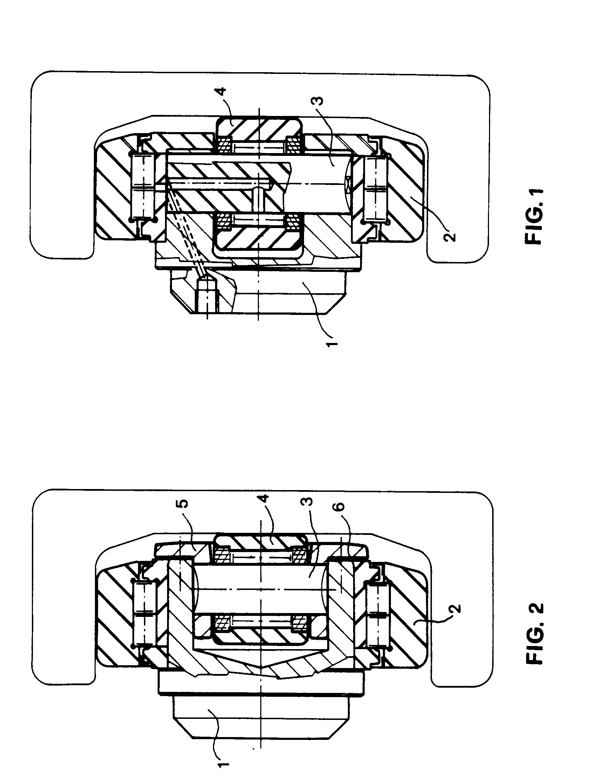

A cross-section of one of these known bearings is shown in Fig. 1; it comprises a pin or support 1, fixed to the upright, to which a radial bearing or guide bearing 2 is fitted.

Support 1 is hollow; a pin 3 is fixed inside it, on which thrust bearing 4 is fitted.

This system is more compact and increases channel slide to reach greater heights; it also shortens upright assembly time as only one bearing needs to be positioned as opposed to two.

This type of bearing does not fully solve the problem, however, as the position of roller 4 is fixed in relation to the body of the bearing.

In time, wear on the parts forms a groove in the web of the channel iron making up the upright, creating play which is very dangerous, especially when working with the forks at maximum height, or when using apparatus designed to lift containers, manoeuvring very heavy, large loads.

In such extreme cases, any play whatever between uprights and guides must obviously be eliminated, as the slightest imbalance of the load could cause a dangerous situation.

To obviate this drawback, bearings of the kind described above have been designed, with the difference that they are adjustable, as pin 3 of roller 4 is fitted to an auxiliary support 5 (Fig. 2) inserted in the seating of main support 1.

Auxiliary support 5 has an edge 6 which comes into contact with the body of main support 1, which means that the position can be adjusted by inserting suitable shims.

One of these known combined bearings is illustrated in the German publication "Walzlagertechnik" - FAG Kugelfischer - 1981-2 pag. 14

However, although this system solves the problem of adjusting the thrust roller, it creates other technical and financial problems.

The presence of auxiliary support 5 means that the width of roller 4 must be reduced by an amount equal to the thickness of the walls of support 5.

The specific pressures between roller and channel thus increase, with a resulting increase in wear.

Equally, the need to make auxiliary support 5 with the necessary precision and low tolerances increases the cost of the product.

DE-B-1287381 shows an adjustable combined bearing comprising a support fitted with an outer radial bearing, and a thrust bearing mounted on a pin and housed in a cavity cut in the said support. US-A-2059150 describes a device for adjusting a bearing roller relatively to a standard wherein a radial bearing is mounted on an eccentric pin integral with a support which can be locked in any angular position with respect to a carriage portion, by tightening screw threads.

To eliminate the above mentioned drawbacks, this invention features an adjustable combined bearing according with the characterizing part of claim 1.

This special conformation of the parts means that the position of the roller can be adjusted simply by rotating the support pin, while wider rollers can be used and the size of the cavity in the main support exploited to the full.

This invention will now be described in detail, with particular reference to the annexed figures, in which:

- Figure 3 shows a cross-section of a bearing in accordance with the invention

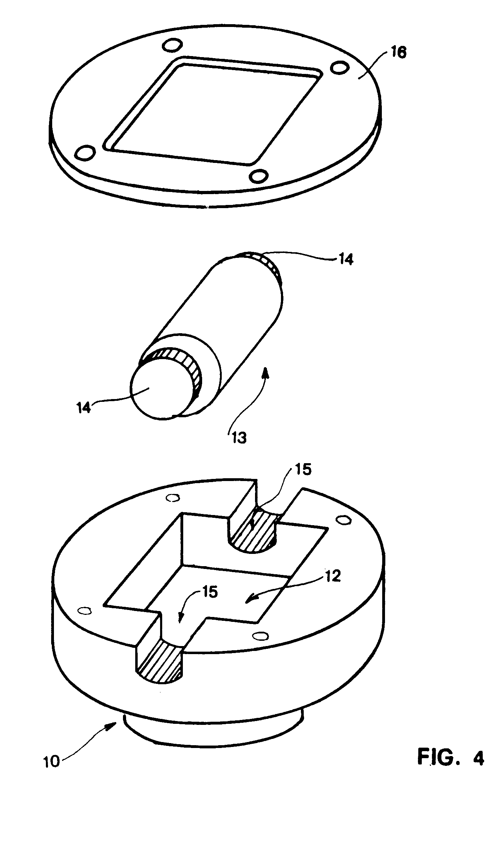

- Figure 4 shows an exploded view of the parts used for assembly and adjustment of roller 4 (which is not shown for reasons of clarity)

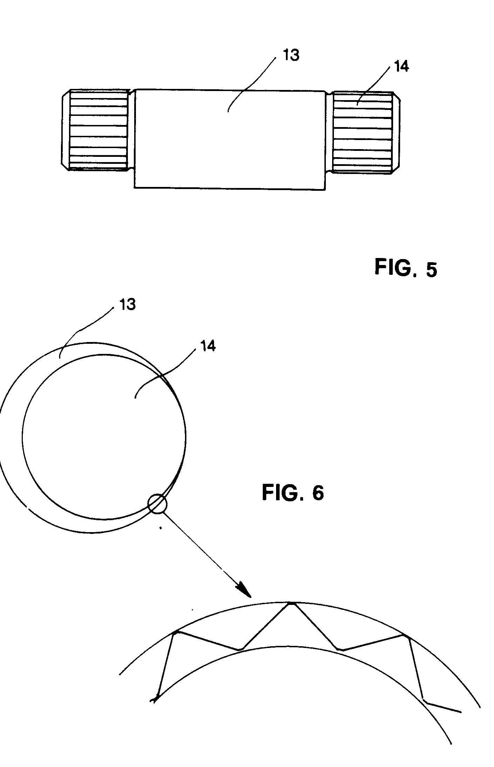

- Figures 5 and 6 show two views of the roller support pin.

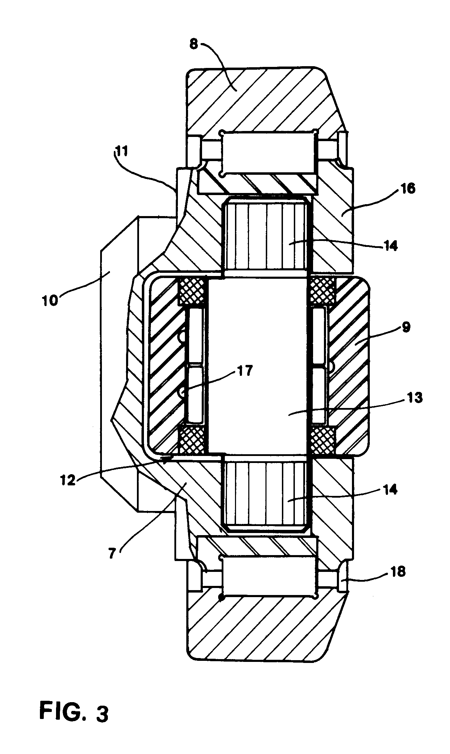

The bearing in accordance with the invention (Figure 3) comprises support 7 (main support) on which radial bearing 8 and thrust bearing or roller 9 are fitted. For the sake of clarity the latter will be described hereafter as "thrust roller".

Support 7 is fitted with a shank 10 and a collar 11 which ensures exact positioning.

Radial bearing 8, for example the roller type, is fitted onto support 7 which has a cavity 12 in the centre used as a seating for thrust roller 9.

The latter is fitted on support pin 13 which has head parts 14 with scored or grooved surfaces, arranged eccentrically to the pin axis.

Two seatings 15 are cut at two opposite sides of cavity 12 for ends 14 of pin 13, with a shape matching that of the pin ends.

Cover 16 is fixed in a usual way, e.g. with screws, to support 7, and is fitted with projecting parts, not illustrated, which press against head parts 14, locking the pin in its seating.

Roller 9 projects from cover 16, passing through an opening in the centre of the cover.

The inner surface of roller 9 presents a helical groove 17 which acts as a grease reserve and can be connected to a lubricator of known type, located, for example, in shank 10.

Ring-shaped lip seal 18, preferably having a steel core covered with rubber edging, closes the gap between radial bearing 8 and cover 16.

To fit the bearing to a channel constituting the lift truck upright, insert shank 10 into a hole drilled in the channel until collar 11 meets the channel; then fix permanently, e.g. by welding the chamfered edge of the shank.

During the upright stroke outer bearing 8 works against the flanges of the channel iron, while roller 9 works in contact with the web.

To eliminate play formed along the route of roller 9 as a result of wear, it is sufficient to remove cover part 16, take out eccentric pin 13 and replace it in seats 15 after rotating it so as to move the axis of roller 9 far enough outwards.

In this way, play between the channels constituting the upright can be eliminated, thereby preventing the risk of the load becoming unbalanced.

In the example illustrated, head parts 14 of eccentric pin 13 are scored, but the same result can obviously be obtained with grooved parts, or if all that is required is a few, not excessively precise regulations, with polygonal parts inserted in seatings of the same shape.

The sizes and materials used can obviously be varied, depending on practical requirements.

## Claims

1. An adjustable combined bearing, of the kind comprising a support (7) fitted with an outer radial bearing (8) and a thrust bearing (9) mounted on a pin (13) and housed in a cavity cut in said support (7), characterised in that the said thrust bearing (9) is fitted with head parts (14) arranged eccentrically to said pin (13), the head parts being scored or grooved or polygonal and housed in seatings (15) of a matching shape, the seatings (15) being cut at two opposite sides of the cavity (12) and covered by a cover (16) detachably fastened to the support (10) and pressing against the head parts (14), so that the pin (13) is thereby locked in its seatings (15) and can be adjusted at various angles by detaching the cover (16).

2. Adjustable combined bearing as per claim 1, characterised by the fact that the inner surface of the thrust roller presents a helical groove (17) acting as lubricant reserve.

3. Bearing as per the above claims, characterised by the fact that it presents a ring-shaped seal element (18) with lip gasket between the outer radial bearing (8) and the cover (16).

## Revendications

1. Palier combiné réglable du type comprenant un support avec un palier radial (8) et une butée (9) montée sur une cheville excentrique (13) et inserée dans une cavité taillée dans ledit support (7), caractérisé en ce que ladite butée (9) a des abouts excentriques (14) de ladite cheville (13), les abouts étant rayés, cannelés ou polygonals et étant insérés dans des logements (15) de forme complémentaire, les logements (15) étant taillés des deux côtés opposées de la cavité (12) et étant fermés par un couvercle amovible (16) fixé au support (10) et qui presse les abouts (14) de manière que la cheville (13) reste bloquée dans ses logements (15) et peut être reglée à différents angles enlevant le couvercle (16).

2. Palier combiné réglable selon la revendication 1, caractérisé en ce que la surface intérieure de la butée a une rainure hélicoïde (17) constituant une réserve de lubrifiant.

3. Palier combiné réglable selon les revendications précédentes, caractérisé en ce que il a des éléments d'étanchéité annulaires (18) avec un joint d'étanchéité parmi le palier radial extérieur (8) et le couvercle (16).

## Patentansprüche

1. Einstellbares kombiniertes Lager, mit einem Halteteil (7), das mit einem äußeren Radiallager (8) und einem auf einem Zapfen (13) sitzenden und in einem im Halteteil (7) ausgenommenen Hohlraum untergebrachten Drucklager (9) versehen ist, dadurch gakennzeichnet, daß das Drucklager (9) mit exzentrisch zum Zapfen (13) angeordneten Kopfteilen (14) versehen ist, die gerillt oder genutet oder polygonal und in Sitzen (15) angepaßter Gestalt untergebracht sind, wobei die Sitze (15) an zwei entgegengesetzten Seiten des Hohlraumes (12) ausgenommen und durch eine Abdeckung (16) abgedeckt sind, die an dem Halteteil (10) lösbar befestigt ist und gegen die Kopfteile (14) drückt, so daß der Zapfen (13) in seinen Sitzen (15) festgelet ist und durch Lösen der Abdeckung (16) in verschiedene Winkel eingestellt werden kann.

2. Einstellbares kombiniertes Lager den Anspruch 1, dadurch gekennzeichnet, daß die Innenfläche der Druckrolle eine schraubenförmige Nut (17) bildet, die als Schmiermittelreserve dient.

3. Lager den Anspruch 1 oder 2, dadurch gekennzeichnet, daß es ein ringförmiges Dichtelement (18) mit Dichtlippe zwischen dem äußeren Radiallager (8) und der Abdeckung (16) aufweist.

**FIG. 2**

**FIG. 1**

EP 0 325 680 B1

**FIG. 3**

FIG. 4

FIG. 5

FIG. 6